# EUROPEAN PATENT APPLICATION

(11) **EP 2 913 748 A1**
(43) Date of publication of application: **02.09.2015**
(21) Application number: 14200671.7
(22) Date of filing: 30.12.2014
(51) Int. Cl.: G06F 3/16, G06F 3/0488

(54) **Touch panel capable of recognizing key touch**

(30) Priority: 28.02.2014 KR 20140024036
(71) Applicant: NaoPlus Co. Ltd., Gyeonggi-do (KR)
(72) Inventor: Yang, Young-Bae, Seongnam-si Gyeonggi-do 463-420 (KR); Jung, Dong-Gju, Seongnam-si Gyeonggi-do 443-280 (KR)
(74) Representative: Stolmár & Partner Patentanwälte PartG mbB

(57) **Abstract**

Disclosed herein is a touch panel capable of recognizing a key touch, which is capable of representing a result of a touch in sound only if a user wants the sound when the user touches a keypad in order to enter a key. The touch panel capable of recognizing a key touch includes key entry members 10 touched by a user, a sound output member 20 configured to output sounds, a sound control member 30 electrically connected to the sound output member 20 and the key entry members 10 and configured to output a sound, corresponding to a specific key entry member 10, through the sound output member 20 when a specific key entry member 10 is entered, and a sound selection member 40 electrically connected to the sound control member 30 and configured to turn on or off the sound control member 30.

## Description

### CROSS REFERENCE TO RELATED APPLICATION

The present application claims the benefit of Korean Patent Application No. 10-2014-0024036 filed in the Korean Intellectual Property Office on February 28, 2014, the entire contents of which are incorporated herein by reference.

### BACKGROUND OF THE INVENTION

### 1. Technical Field

The present invention relates to a touch panel capable of recognizing a key touch, which is capable of representing a result of a touch in sound only if a user wants the sound when the user touches a keypad in order to enter a key.

### 2. Description of the Related Art

In general, in a device, such as a Personal Computer (PC) or a network terminal, a keyboard is widely used as means for an interface between the device and a user.

Most of keyboards have mechanical elements. Springs and switches are disposed under keys fabricated by injection molding. When a user strikes a key using specific strength, a corresponding switch is manipulated by overcoming its elastic force, thereby performing a key input.

In addition to the keyboard having such mechanical elements, a keyboard using a touch sensor method has emerged. The keyboard using a touch sensor method is equipped with technical means for detecting and recognizing whether contact with the human body (e.g., a finger) or a pen has been made or not based on the detection of current of the human body or a change in pressure or temperature according to the touch.

For this reason, a keyboard using such a touch sensor method is widely used. The keyboard using the touch sensor method is advantageous in that it may be made slim and may become high quality and it may minimize a shock applied to the human body, in particular, a finger when a key is struck as compared to a keyboard having a mechanical construction.

In the keyboard having a mechanical element, the strike of a key may be immediately recognized by the sense of a finger. In contrast, in the keyboard using the touch sensor method, it is difficult for a user to recognize whether a key touch has been properly performed or whether an entered key has been correctly recognized because whether or not a touch has been made is determined based on a change in the electrical state.

The background of the present invention is disclosed in Korean Patent No. 10-0831408 (February 29, 2008).

### SUMMARY OF THE INVENTION

Accordingly, the present invention has been made keeping in mind the above problems occurring in the prior art, and an object of the present invention is to provide a touch panel capable of recognizing a key touch, which is capable of representing a result of a touch in sound only if a user wants the sound when the user touches a keypad in order to enter a key.

A touch panel capable of recognizing a key touch in accordance with an embodiment of the present invention includes key entry members 10 touched by a user, a sound output member 20 configured to output sounds, a sound control member 30 electrically connected to the sound output member 20 and the key entry members 10 and configured to output a sound, corresponding to a specific key entry member 10, through the sound output member 20 when a specific key entry member 10 is entered, and a sound selection member 40 electrically connected to the sound control member 30 and configured to turn on or off the sound control member 30.

The sound control member 30 may include a sound storage unit 31 configured to store letters or numbers corresponding to the respective key entry members 10, an input detection unit 32 configured to detect the entry of the key entry members 10, and a sound control unit 33 configured to search for a corresponding sound stored in the sound storage unit 31 when the input detection unit 32 detects the entry of a corresponding key entry member 10 and to control the sound output member 20 so that the retrieved sound is output.

The sound control member 30 may control the sound output member 20 so that a sound is output through the sound output member 20 for 1 ms.

The sound control member 30 may control the sound output member 20 first once when identical consecutive key values are received within 10 ms through the key entry members 10.

### BRIEF DESCRIPTION OF THE DRAWINGS

FIG. 1 is a block diagram of a touch panel capable of recognizing a key touch in accordance with an embodiment of the present invention; and
FIG. 2 is a block diagram of a sound controller applied to the present invention.

### DETAILED DESCRIPTION

The details of other embodiments are included in the detailed description and the drawings.

The merits and characteristics of the present invention and a method for achieving the merits and characteristics will become more apparent from embodiments described in detail later in conjunction with the accompanying drawings. However, the present invention is not limited to the disclosed embodiments, but may be implemented in various ways. The embodiments are provided to complete the disclosure of the present invention and to allow those skilled in the art to understand the scope of the present invention. The present invention is defined by the category of the claims. The same reference numbers will be used to refer to the same or similar parts throughout the drawings.

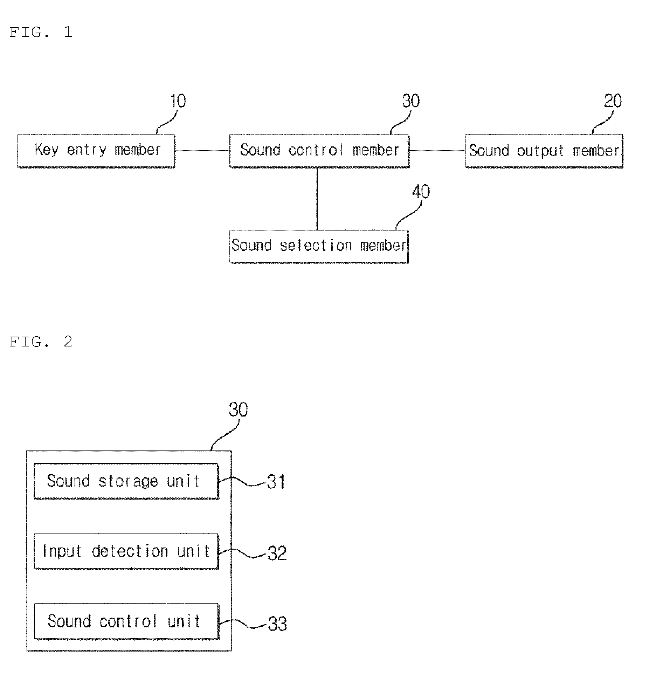

As shown in FIGS. 1 and 2, a touch panel capable of recognizing a key touch in accordance with an embodiment of the present invention is configured to include key entry members 10, a sound output member 20, a sound control member 30, and a sound selection member 40.

The key entry members 10 are touched by a user, and may be formed of a touch panel, a keypad, or a keyboard. The key entry members 10 may be connected to a computer, and may be used to input the alphabet or numbers in response to the touch of a user. An input letter or number may be displayed on a screen.

The sound output member 20 is configured to output sound, and may be formed of a buzzer or a speaker. If the sound output member 20 is formed of a buzzer, the buzzer is embedded in the touch panel, that is, the key entry members 10, and may output a "beeping" sound in response to the entry of a specific key entry member 10. If the sound output member 20 is formed of a speaker, the speaker is electrically connected to the key entry members 10, and may output a "beeping" sound like a buzzer or output a sound corresponding to a letter or a number in response to the entry of a specific key entry member 10.

The sound control member 30 is electrically connected to the key entry members 10 touched by a user and the sound output member 20 configured to output a sound. The sound control member 30 outputs a sound, corresponding to a corresponding key entry member 10, through the sound output member 20 in response to the entry of the key entry member 10. The sound control member 30 may be formed of a Printed Circuit Board (PCB) on which a programmable Integrated Circuit (IC) chip and electronic components are mounted, and thus may be embedded in the touch panel, that is, the key entry members 10.

Furthermore, the sound control member 30 includes a sound storage unit 31 configured to store sounds corresponding to the alphabet or numbers corresponding to the respective key entry members 10, an input detection unit 32 configured to detect the entry of the key entry members 10, and a sound control unit 33 configured to search for a corresponding sound stored in the sound storage unit 31 when the input detection unit 32 detects the entry of a corresponding key entry members 10 and to control the sound output member 20 so that it outputs the retrieved sound.

When a user inputs a letter or a number through a specific key entry member 10, the input detection unit 32 detects the letter or number. In response thereto, the sound control unit 33 may search the sound storage unit 31 for a sound corresponding to the letter or number, and may control the sound output member 20 so that it outputs the retrieved sound. For example, when a user inputs "A", "B", and "C" or "1", "2", and "3", the sound output member 20 outputs sounds "ei", "bi:", and "si:" or "il", "i:", and "sam".

Furthermore, the sound control member 30 may be configured to control the sound output member 20 so that it outputs a sound for 1 millisecond (ms). Accordingly, when a key value corresponding to a specific letter or number is input through a specific key entry member 10, a buzzer sound or a sound corresponding to the input letter or number may be output for 1 ms. Accordingly, although the typing speed of a user is fast and many letters or numbers are continuously input, corresponding buzzer sounds or sounds may be sequentially accurately output one by one without overlapping each other.

In addition, the sound control member 30 may be configured to control the sound output member 20 only once when the same key values are consecutively received through a specific key entry member 10 for 10 ms. Accordingly, if the same letters or numbers are received within 10 ms, a sound corresponding to only the first letter or number may be output. That is, the same buzzer sounds or sounds corresponding to the same letters or numbers can be prevented from being output when the same letters or numbers are consecutively received.

The sound selection member 40 is electrically connected to the sound control member 30, and may be formed of a switch configured to turn on or off the sound control member 30. Accordingly, when a user performs a switching operation on the sound selection member 40 so that power is supplied to the sound control member 30, the sound control member 30 may control the sound output member 20 so that it outputs a sound in response to the entry of a specific key entry member 10. If a user performs a switching operation on the sound selection member 40 so that power is not supplied to the sound control member 30, the sound control member 30 does not operate, and any sound is not output through the sound control member 30 although the key entry members 10 are entered. Accordingly, a user may artificially manipulate the sound control member 30 so that a sound corresponding to the entry of a specific key entry member 10 is output or not output through the sound selection member 40.

As described above, according to the present invention, only when a user touches the keypad in order to enter a key, a result of the touch can be represented in sound only if the user wants the sound. Accordingly, the user can hear an entered letter or number in a buzzer sound or a sound. Accordingly, according the present invention, a user can check the accuracy of an entered letter or number and can rapidly handle a typing error because he or she can recognize the typing error. In particular, the present invention may be said to be a very useful invention that may be conveniently used by hearing-impaired persons.

As described above, those skilled in the art to which the present invention pertains will appreciate that the present invention may be implemented in different detailed ways without departing from the technical spirit or essential characteristics of the present invention. Accordingly, the aforementioned embodiments should be construed as being only illustrative, but should not be constructed as being restrictive from all aspects. The scope of the present invention is defined by the following claims rather than the detailed description, and the meanings and scope of the claims and all changes or modified forms derived from their equivalents should be construed as falling within the scope of the present invention.

## Claims

1. A touch panel capable of recognizing a key touch, comprising:
key entry members 10 touched by a user;
a sound output member 20 configured to output sounds;
a sound control member 30 electrically connected to the sound output member 20 and the key entry members 10 and configured to output a sound, corresponding to a specific key entry member 10, through the sound output member 20 when a specific key entry member 10 is entered; and
a sound selection member 40 electrically connected to the sound control member 30 and configured to turn on or off the sound control member 30.

2. The touch panel of claim 1, wherein the sound control member 30 comprises:
a sound storage unit 31 configured to store letters or numbers corresponding to the respective key entry members 10;
an input detection unit 32 configured to detect the entry of the key entry members 10; and
a sound control unit 33 configured to search for a corresponding sound stored in the sound storage unit 31 when the input detection unit 32 detects the entry of a corresponding key entry member 10 and to control the sound output member 20 so that the retrieved sound is output.

3. The touch panel of claim 1 or 2, wherein the sound control member 30 controls the sound output member 20 so that a sound is output through the sound output member 20 for 1 ms.

4. The touch panel of claim 1 or 2, wherein the sound control member 30 controls the sound output member 20 first once when identical consecutive key values are received within 10 ms through the key entry members 10.
